# EUROPÄISCHE PATENTSCHRIFT

(11) **EP 1 413 821 B1**
(45) Veröffentlichungstag und Bekanntmachung des Hinweises auf die Patenterteilung: **21.03.2007**
(21) Anmeldenummer: 02023530.5
(22) Anmeldetag: 22.10.2002
(51) Int. Cl.: F16M 11/32, F16B 7/14

(54) **Stativ**
Stand
Support

(43) Veröffentlichungstag der Anmeldung: 28.04.2004
(73) Patentinhaber: SWAROVSKI OPTIK KG, 6067 Absam i. Tirol (AT)
(72) Erfinder: Pernstich, Ludwig DI, 6020 Rum bei Innsbruck (AT); Miller, Benno DI, 6020 Innsbruck (AT); Freisinger, Henry Ing., 1210 Wien (AT)
(74) Vertreter: Kador & Partner

(56) Entgegenhaltungen:
- EP-A- 1 124 087
- DE-C- 562 064
- US-A- 3 419 293

## Beschreibung

Die Erfindung bezieht sich auf ein Stativ mit einem Stativoberteil, wenigstens einem Stativbein, das zur Längeneinstellung aus drei ineinander verschiebbar geführten rohrförmigen Segmenten besteht, und einer Fixiereinrichtung zur Fixierung der eingestellten Länge des Stativbeines.

Derartige Stative, deren Stativoberteil beispielsweise zur Aufnahme von optischen Geräten, z.B. Teleskope oder Kameras, ausgebildet sein kann, sind bekannt. Sie weisen meistens drei Stativbeine auf. Zur Bereitstellung geringer Transportmaße werden die Beine um die im wesentlichen waagerecht verlaufenden Achsen am Stativoberteil nach innen geklappt und die Segmente der Stativbeine teleskopartig ineinander geschoben. Zur Fixierung der eingestellten Länge der Beine ist bei den bekannten Stativen zwischen zwei benachbarten Segmenten jeweils ein Bedienelement vorgesehen, mit dem eine Klemm- oder dergleichen Einrichtung betätigt wird, um benachbarte Segmente aneinander zu fixieren. Bei einem dreibeinigen Stativ mit jeweils drei Stativbeinsegmenten ergibt sich somit eine Zahl von insgesamt sechs Bedienelementen, die zur Fixierung beispielsweise beim Aufbau des Stativs jeweils einzeln bedient werden müssen. Zudem ist eine Betätigung der unteren Bedienelemente meist nur in gebückter Haltung möglich.

Aus DE-C-562 064 ist ein Stativ nach dem Oberbegriff des Anspruchs 1 mit einem Klemmmechanismus bekannt, der nur zwischen zwei Segmenten wirksam ist, so dass sich der Anwender bei drei Segmenten ebenfalls bücken muss.

Aufgabe der Erfindung ist es, ein Stativ bereitzustellen, das möglichst geringe Transportmaße aufweist und dennoch eine rasche und einfache Einstellung der Länge der einzelnen Stativbeine ermöglicht.

Dies wird erfindungsgemäß mit dem in Anspruch 1 gekennzeichneten Stativ erreicht. In den Unteransprüchen sind vorteilhafte Ausgestaltungen des erfindungsgemäßen Stativs wiedergegeben.

Erfindungsgemäß wird die Fixiereinrichtung jedes Beines lediglich durch Verdrehen von zwei Segmenten gegeneinander betätigt, und zwar durch Drehung des mittleren Segments gegenüber dem am Stativoberteil befestigten ersten oder oberen Segment. Damit brauchen zum Aufstellen eines dreibeinigen Stativs insgesamt nur drei Segmente gedreht zu werden, um die Segmente aller drei Beine zu fixieren. Damit kann die Längeneinstellung der Beine schnell und praktisch ohne Bücken durchgeführt werden. Erfindungsgemäß ist also die gesamte Fixiereinrichtung des Stativbeines durch Verdrehung eines der unteren Segmente gegenüber dem an dem Stativoberteil befestigtem Segment betätigbar.

Vorzugsweise ist an dem vom Stativoberteil abgewandten, also unteren Ende des ersten oder oberen Segments ein Drehgriff vorgesehen, um das mittlere Segment gegenüber dem oberen Segment zu verdrehen. Dadurch wird die Aufstellung des Stativs zusätzlich erleichtert.

Der Drehgriff kann dazu drehbar und axial unverschiebbar am oberen Segment gelagert sein. Er greift axial verschiebbar und drehfest an dem mittleren Segment an, beispielsweise durch einen Vorsprung, der in eine Längsnut des mittleren Segments eingreift.

Das dritte Segment ist gegenüber dem mittleren Segment und jedes weitere Segment gegenüber dem dem Stativoberteil zugewandten benachbarten Segment drehfest angeordnet, beispielsweise durch einen Vorsprung, der in eine Längsnut in dem mittleren bzw. dem weiteren dem Stativ zugewandten benachbarten Segment eingreift.

Die Segmente der Stativbeine sind vorzugsweise teleskopartig ineinander verschiebbar ausgebildet, und zwar ist vorzugsweise jedes Segment in dem dem Stativoberteil zugewandten benachbarten Segment verschiebbar geführt.

Durch die Ausbildung der Segmente als Rohre, also als geschlossene Profile, ist eine hohe Stabilität gewährleistet und zudem die Verschmutzungsgefahr gering.

Die Fixiereinrichtung ist als Klemmeinrichtung ausgebildet, um eine stufenlose Längseinstellung zu ermöglichen.

Um geschlossene Rohrsegmente bilden zu können, weist die Klemmeinrichtung eine in dem Stativbein koaxial angeordnete Stange auf, die in dem ersten Segment drehfest geführt ist, um die jedoch die übrigen Segmente gedreht werden können. Ferner ist ein auf der Stange drehfest und axial verschiebbarer Schieber vorgesehen, der bei Drehung des mittleren Segments gegenüber dem ersten Segment in einer Richtung wenigstens ein Klemmglied in Eingriff mit der Innenseite des ersten und mittleren Segments bringt. Durch Drehung des mittleren Segments gegenüber dem ersten Segment in der Gegenrichtung wird das Klemmglied wieder außer Eingriff gebracht.

Das Klemmglied, das vorzugsweise durch einen Hebel gebildet wird, weist zum Reibschluss an der Innenseite des ersten und des mittleren Segments vorzugsweise einen Reibbelag auf.

Der Klemmhebel, der an der Innenseite des ersten Segments angreift, ist an der Stange befestigt, und zwar vorzugsweise an der dem Stativ zugewandten Ende der Stange. Demgegenüber ist der Klemmhebel, der an der Innenseite des mittleren Segments angreift, an dem dem Stativ zugewandten Ende des dritten Segments befestigt.

Zum Angriff des Schiebers weist der Klemmhebel auf seiner der Stange zugewandten Innenseite eine zur Längsachse des Stativbeines schräg verlaufende Fläche auf. Der Schieber, der vorzugsweise als Hülse ausgebildet ist, ist gegen die schräge Fläche mit einer Feder belastet. Um den Schieber mit der Feder gegen die Keilfläche an dem Klemmhebel zu drücken, ist an dem vom Stativoberteil abgewandten Ende des Schiebers eine Ringschulter mit einer dem Stativoberteil zugewandten Fläche vorgesehen. Das mittlere und das dritte Segment weisen an dem dem Stativoberteil zugewandten Ende eine von dem Stativoberteil weggerichtete Widerlager- oder Gegenfläche auf, die durch die Feder gegen die Fläche an dem Schieber belastet ist. Die Fläche an dem Schieber ist als zur Stativbeinlängsachse schräge Nocke ausgebildet. Statt dessen kann auch die Gegenfläche oder sowohl die Fläche am Schieber wie die Gegenfläche eine solche Nocke bilden.

Um den Klemmhebel aus der Reibschlussstellung zu lösen, kann er durch eine Rückstellfeder belastet sein.

Während der Hebel, der an der Innenseite des ersten Segments angreift, an dem dem Stativoberteil zugewandten Ende der Stange angelenkt ist, ist der Hebel, der an der Innenseite des mittleren Segments und bei mehr als drei Segmenten pro Bein an der Innenseite des dritten und jedes weiteren Segments angreift, an dem dem Stativ zugewandten Ende des dritten bzw. des nächsten Segments angelenkt.

Zum Beispiel greifen jeweils zwei oder drei auseinander spreizbare Klemmhebel an der Innenseite der Segmente an.

Nachstehend ist eine Ausführungsform der Erfindung anhand der Zeichnungen beispielhaft näher erläutert. Darin zeigen:
- Fig. 1.: eine Seitenansicht eines Stativs;
- Fig. 2,: eine perspektivische Ansicht eines Stativbeines;
- Fig. 3.: einen Längsschnitt durch das Stativbein in dem Bereich der Einrichtung, in dem das zweite Segment gegen das erste Segment geklemmt wird;
- Fig. 4.: einen Schnitt entlang der Linie IV - IV in Fig. 3;
- Fig. 5.: einen Längsschnitt durch das Stativbein in dem Bereich der Einrichtung, in dem das dritte Segment gegen das zweite Segment geklemmt wird;
- Fig. 6.: einen Querschnitt entlang der Linie VI - VI in Figur 5;
- Fig. 7.: einen Längsschnitt im Bereich des Drehgriffs an dem ersten Segment.

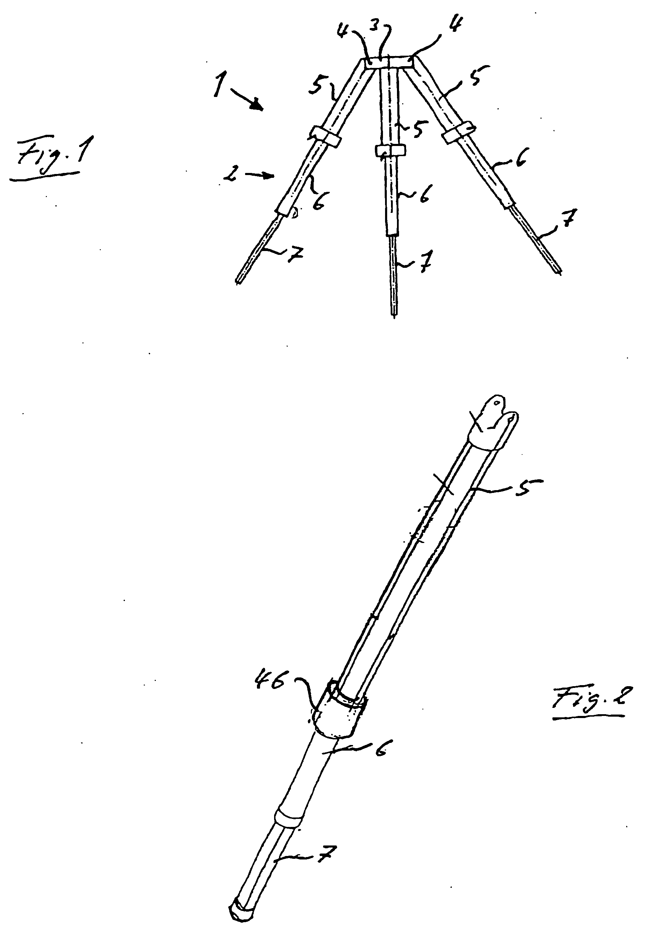

Das Stativ (1) weist nach Figur 1 drei Beine (2) auf, die am Stativoberteil (3) um etwa waagerecht verlaufende Achsen (4) verschwenkbar angeordnet sind. Statt direkt am Stativoberteil können die Stativbeine (2) auch an einer Mittelsäule angelenkt sein, auf der das Stativoberteil angeordnet ist.

Die Beine (2) sind teleskopierbar ausgebildet. Dazu besteht jedes Bein (2) aus drei ineinander verschiebbar geführten rohrförmigen Segmenten (5, 6, 7), wobei das untere, also vom Stativoberteil (3) abgewandte innere Segment (7) in dem mittleren Segment (6) geführt ist, und dieses im oberen Segment (5), das mit der Achse (4) am Stativoberteil (3) angelenkt ist.

Um die eingestellte Länge der teleskopierbaren Stativbeine (2), also die Schiebeposition des mittleren Segments (6) und des unteren oder dritten Segments (7) eines Beines (2) zu fixieren, weist jedes Stativbein (2) eine Fixiereinrichtung auf, die durch Verdrehung des mittleren Segments (6) gegenüber dem ersten Segment (5) betätigt wird.

Die Fixiereinrichtung ist dazu als Klemmeinrichtung ausgebildet, die gemäß Figur 3 bis 6 eine in dem Stativbein (2) koaxial verlaufende Stange (8) aufweist, die an dem ersten Segment (5) drehfest geführt ist. Dazu ist die Stange (8) an dem dem Stativoberteil (3) zugewandten Ende mit einem Querjoch (9) versehen, das mit einem Vorsprung (11) in eine Längsnut (12) an der Innenseite des ersten Rohrsegments (5) eingreift. Dem gegenüber sind das mittlere Segment (6) und das dritte Segment (7) um die Stange (8) drehbar angeordnet (Fig. 5 und 6).

Auf der Stange (8) sind zwei als Hülse oder Muffe ausgebildete Schieber (13, 14) verschiebbar geführt. Der Schieber (13) ist dabei zur Klemmung des mittleren Segments (6) in dem ersten Segment (5) und der Schieber (14) zur Klemmung des dritten Segments (7) in dem mittleren Segment (6) vorgesehen. Die Schieber (13, 14) sind an der Stange (8) durch einen Vorsprung (15, 16), der in eine Längsnut (17) in der Stange (8) eingreift, drehfest angeordnet.

Die Klemmeinrichtung weist zur Klemmung des mittleren Segments (6) in dem ersten Segment (5) und zur Klemmung des dritten Segments (7) in dem mittleren Segment (6) jeweils zwei oder mehrere auseinander spreizbare Klemmhebel (18, 19) und (20, 21) auf. Während die Klemmhebel (18, 19) an dem Querjoch (9) um eine zur Stativbeinlängsachse (27) quer verlaufende Achse (22, 23) verschwenkbar sind, sind die Klemmhebel (20, 21) an der Endkappe (24) an dem dem Stativoberteil (3) zugewandten Ende des dritten Segments (7) um quer verlaufende Achsen (25, 26) verschenkbar angelenkt.

Die Schieber (13, 14) greifen an einer zur Längsachse (27) des Stativbeines (2) schräg verlaufenden Fläche (28a, 28b, 29a, 29b) an der der Stange (8) zugewandten Seite der Klemmhebel (18, 19 bzw. 20, 21) an.

Die Schieber (13, 14) sind dazu mit einer Feder (31, 32), die sich mit ihrem anderen Ende entweder direkt an der Endkappe (33) an dem mittleren Segment (6) bzw. über ein Querjoch (34), an der die Hebel (20, 21) angelenkt sind, an der Endkappe (24) an dem dritten Segment (7) abstützt, in Richtung der Keilfläche (28a, 28b bzw. 29a, 29b) belastet.

Um durch Drehung des mittleren Segments (6) die Schieber (13, 14) zu verschieben, weist jeder Schieber (13, 14) an dem vom Stativoberteil (3) abgewandten Ende eine Ringschulter (35, 36) auf, deren dem Stativoberteil (3) zugewandte Fläche als schräge Nockenfläche (37, 38) ausgebildet ist.

An der Nockenfläche (37, 38) greift jeweils eine als Widerlager ausgebildete Gegenfläche (39, 40) an, die an der Innenseite, also der vom Stativoberteil (3) abgewandten Seite der Endkappen (33, 24) vorgesehen ist.

Wenn das mittlere Rohrsegment (6) gedreht wird, wird das Widerlager (39) damit von der in Figur 3 dargestellten Position, in der es an dem Abschnitt (37a) der Nockenfläche (37) anliegt, zu dem Abschnitt (37b) der Nockenfläche (37) an der Ringschulter (35) bewegt. Dadurch wird der Schieber (13) durch die Feder (31) in Richtung des Pfeiles (42) gegen die Keilflächen (28a, 28b) der beiden Klemmhebel (18, 19) bewegt, wodurch diese auseinander gespreizt werden und mit ihrer Außenfläche an der Innenseite des ersten Rohrsegments (5) unter Reibschluss anliegen.

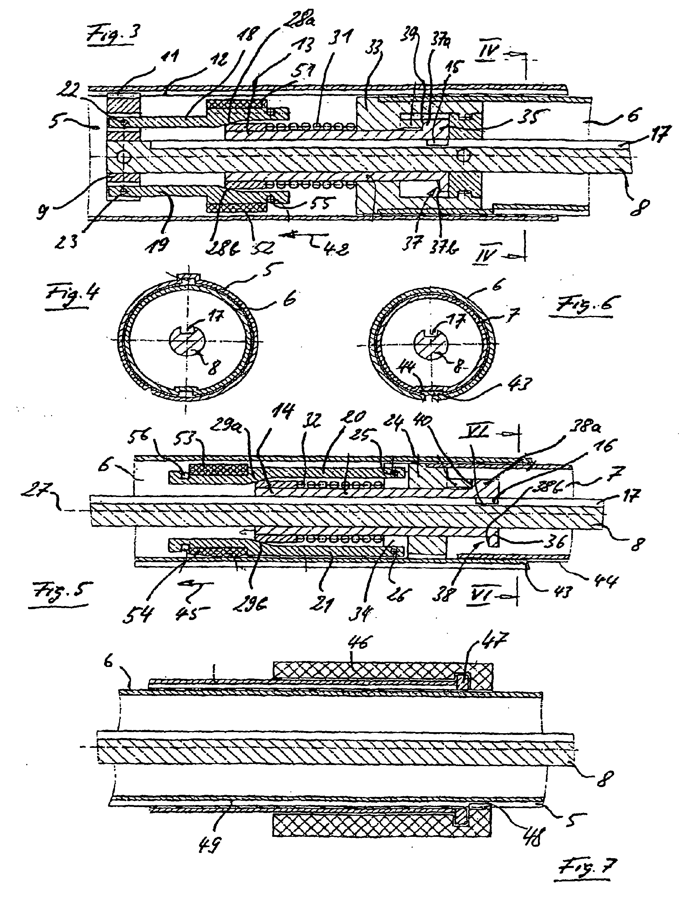

Während, wie insbesondere aus Figur 4 ersichtlich ist, das mittlere Rohrsegment (6) gegenüber dem ersten Segment (5) drehbar ist, sind das mittlere Segment (6) und das dritte Segment (7) drehfest miteinander verbunden. Dazu weist gemäß Figur 5 und 6 das mittlere Segment (6) einen nach innen ragenden Vorsprung (43) auf, der in einer Längsnut (44) in dem dritten Segment (7) eingreift.

Wenn das mittlere Segment (6) gedreht wird, wird das dritte Segment (7) mitgedreht, wodurch das Widerlager (40) von dem Abschnitt (38a) der Nokkenfläche (38) an der Ringschulter (36) zu dem Abschnitt (38b) der Nockenfläche bewegt und damit der Schieber (14) durch die Feder (32) in Richtung des Pfeiles (45) verschoben wird.

Durch Angriff des Schiebers (14) an den schräg verlaufenden Flächen (29a, 29b) werden die Klemmhebel (20, 21) auseinander gespreizt und damit das Segment (7) gegen das Segment (6) geklemmt.

Zur Erhöhung der Klemmkraft sind die Hebel (18, 19 und 20, 21) mit Reibbelägen (51, 52 bzw. 53, 54) versehen.

Wenn die Widerlager (39, 40) in der Klemmstellung an den Abschnitt (37b, 38b) der Nockenflächen (37 bzw. 38) anliegen und die Klemmung gelöst werden soll, werden sie in die in Figur 3 und 5 dargestellte Stellung zurückgedreht. Um das Lösen der Klemmhebel (17, 18 bzw.19, 20) zu unterstützen, sind Rückstellfedern (55, 56) vorgesehen, die die Hebel (17, 18 bzw. 19, 20) umspannen.

Zur Drehung des mittleren Segments (6) und des damit gekoppelten dritten Segments (7) gegenüber dem ersten Segment (5) kann gemäß Figur 7 ein Drehgriff (46) vorgesehen sein. Der Drehgriff (46) ist mit einem Axiallager (47) am ersten Segment (5) drehbar gelagert. An dem mittleren Segment (6) greift er drehfest an, und zwar mit dem Vorsprung (48), der in eine Längsnut (49) im mittleren Segment (6) eingreift. Der Drehgriff (46) ist an dem von Stativoberteil (3) abgewandten Ende des ersten Segments (5) angeordnet, wie insbesondere aus Figur 2 ersichtlich.

## Patentansprüche

1. Stativ (1) mit einem Stativoberteil (3), wenigstens einem Stativbein (2), das zur Längeneinstellung aus jeweils drei ineinander verschiebbar geführten Segmenten (5, 6, 7) besteht, und einer als Klemmeinrichtung ausgebildeten Fixiereinrichtung zur Fixierung der eingestellten Länge des Stativbeins (2), die durch Verdrehung des mittleren Segments (6) gegenüber dem ersten, dem Stativoberteil (3) zugewandten Segment (5) betätigbar ist, **dadurch gekennzeichnet, dass** das dritte, von dem Stativoberteil (3) abgewandte Segment (7) gegenüber dem mittleren Segment (6) drehfest angeordnet ist,
dass die Klemmeinrichtung eine Stange (8) aufweist, die in dem ersten Segment (5) drehfest geführt ist, und gegenüber der das mittlere und das dritte Segment (6, 7) drehbar sind,
dass innerhalb des ersten Segments (5) auf der Stange (8) ein erster axial verschiebbarer Schieber (13) angeordnet ist, der bei Drehung des mittleren Segments (6) gegenüber der Stange (8) in einer Richtung wenigstens ein erstes Klemmglied in und bei Drehung in der Gegenrichtung außer Eingriff mit der Innenseite des ersten Segments (5) bringt, und
dass innerhalb des mittleren Segments (6) auf der Stange (8) ein zweiter axial verschiebbarer Schieber (14) angeordnet ist, der bei Drehung des dritten Segments (7) gegenüber der Stange (8) in einer Richtung wenigstens ein zweites Klemmglied in und bei Drehung in der Gegenrichtung außer Eingriff mit der Innenseite des mittleren Segments (6) bringt.

2. Stativ nach Anspruch 1, **dadurch gekennzeichnet, dass** an dem ersten Segment (5) ein Drehgriff (46) drehbar gelagert ist, der an dem mittleren Segment (6) drehfest angreift.

3. Stativ nach Anspruch 2, **dadurch gekennzeichnet, dass** der Drehgriff (46) an dem vom Stativoberteil (3) abgewandten Ende des ersten Segments (5) angeordnet ist.

4. Stativ nach Anspruch 1, **dadurch gekennzeichnet, dass** das erste Klemmglied an der Stange (8) angeordnet ist.

5. Stativ nach Anspruch 1, **dadurch gekennzeichnet, dass** das zweite Klemmglied an dem dem Stativoberteil (3) zugewandten Ende des dritten Segments (7) angeordnet ist.

6. Stativ nach Anspruch 1, **dadurch gekennzeichnet, dass** erste Klemmglied und das zweite Klemmglied eine schräg verlaufende Fläche (28a, 28b; 29a, 29b) aufweist, an der der erste Schieber (13) bzw. der zweite Schieber (14) angreift.

7. Stativ nach Anspruch 6, **dadurch gekennzeichnet, dass** der erste Schieber (13) auf die schräge Fläche (28a, 28b) des ersten Klemmgliedes mit einer ersten Feder (31) und der zweite Schieber (14) auf die schräge Fläche (29a, 29b) des zweiten Klemmgliedes mit einer zweiten Feder (32) belastet ist.

8. Stativ nach Anspruch 7, **dadurch gekennzeichnet, dass** der erste Schieber (13) und der zweite Schieber (14) jeweils eine dem Stativoberteil (3) zugewandte Fläche und das mittlere Segment (6) und das dritte Segment (7) jeweils eine Widerlagerfläche (39, 40) aufweisen, wobei die erste Feder (31) gegen die Fläche an dem ersten Schieber (13) belastet ist und die Fläche an dem zweiten Schieber (14) und/oder die Widerlagerfläche (39, 40) des mittleren Segments (6) und des dritten Segments (7) als zur Stativbeinlängsachse (27) schräge Nockenfläche (37, 38) ausgebildet ist.

9. Stativ nach Anspruch 1, **dadurch gekennzeichnet, dass** das erste Klemmglied aus der Eingriffsstellung durch eine erste Rückstellfeder (55) und das zweite Klemmglied aus der Eingriffsstellung durch eine zweite Rückstellfeder (56) belastet ist.

10. Stativ nach Anspruch 1, **dadurch gekennzeichnet, dass** das erste Klemmglied und das zweite Klemmglied als Hebel (18, 19; 20, 21) ausgebildet ist.

11. Stativ nach Anspruch 10, **dadurch gekennzeichnet, dass** der Hebel (18, 19), aus dem das erste Klemmglied gebildet ist und der an der Innenseite des ersten Segments (5) angreift, an der Stange (8) angelenkt ist.

12. Stativ nach Anspruch 11, **dadurch gekennzeichnet, dass** der Hebel (18, 19), aus dem das erste Klemmglied gebildet ist, an dem dem Stativoberteil (3) zugewandten Ende der Stange (8) angelenkt ist.

13. Stativ nach Anspruch 10, **dadurch gekennzeichnet, dass** der Hebel (20, 21) aus dem das zweite Klemmglied gebildet ist und der an der Innenseite des mittleren Segments (6) angreift, an dem dritten Segment (3) angelenkt ist.

14. Stativ nach Anspruch 1, **dadurch gekennzeichnet, dass** zwei als auseinanderspreizbare Hebel (18, 19) ausgebildete, an der Innenseite des ersten Segments (5) angreifende erste Klemmglieder und/oder zwei als auseinanderspreizbare Hebel (20, 21) ausgebildete, an der Innenseite des mittleren Segments (6) angreifende zweite Klemmglieder vorgesehen sind.

15. Stativ nach Anspruch 9 und 14, **dadurch gekennzeichnet, dass** die erste Rückstellfeder (55) die zwei an der Innenseite des ersten Segments (5) angreifenden Hebel (18, 19) und die zweite Rückstellfeder (56) die zwei an der Innenseite des mittleren Segments (6) angreifenden Hebel (20, 21) verbindet.

16. Stativ nach Anspruch 1, **dadurch gekennzeichnet, dass** der erste Schieber (13) und der zweite Schieber (14) als auf der Stange (8) verschiebbare Hülse ausgebildet ist.

17. Stativ nach einem der vorstehenden Ansprüche, **dadurch gekennzeichnet, dass** das dem Stativoberteil (3) zugewandte Ende des mittleren Segments (6) eine erste Endkappe (33) und das dem Stativoberteil (3) zugewandte Ende des dritten Segments (7) eine zweite Endkappe (24) aufweist.

18. Stativ nach Ansprüchen 8 und 17, **dadurch gekennzeichnet, dass** die Widerlagerfläche (39) des mittleren Segments (6) in der ersten Endkappe (33) und die Widerlagerfläche (14) des dritten Segments (7) in der zweiten Endkappe (24) vorgesehen ist.

19. Stativ nach Ansprüchen 8 und 18, **dadurch gekennzeichnet, dass** die erste Feder (31), die den ersten Schieber (13) belastet, sich an der ersten Endkappe (33) und die zweite Feder (32), die den zweiten Schieber (19) belastet, an der zweiten Endkappe (24) abstützt.

## Claims

1. A tripod (1) having a tripod top (3), at least one tripod leg (2) consisting of three telescopically guided segments (5, 6, 7) for length adjustment, and a fixing device formed as a clamping device for fixing the adjusted length of the tripod leg (2) and actuated by rotation of the middle segment (6) relative to the first segment (5) facing the tripod top (3), **characterized in that** the third segment (7) facing away from the tripod top (3) is disposed rotationally fast relative to the middle segment (6),
the clamping device has a rod (8) guided rotationally fast in the first segment (5) and disposed rotatably in the middle and third segments (6, 7), and relative to which the middle and third segments (6, 7) are rotatable,
a first axially displaceable slide (13) is disposed within the first segment (5) on the rod (8), said slide engaging at least a first clamping element with the inside of the first segment (5) upon rotation of the middle segment (6) relative to the rod (8) in one direction, and disengaging it therefrom upon rotation in the reverse direction, and
a second axially displaceable slide (14) is disposed within the middle segment (6) on the rod (8), said slide engaging at least a second clamping element with the inside of the middle segment (6) upon rotation of the third segment (7) relative to the rod (8) in one direction, and disengaging it therefrom upon rotation in the reverse direction.

2. The tripod according to claim 1, **characterized in that** a turning handle (46) is pivotally mounted on the first segment (5) to act on the middle segment (6) in rotationally fast fashion.

3. The tripod according to claim 2, **characterized in that** the turning handle (46) is disposed at the end of the first segment (5) facing away from the tripod top (3).

4. The tripod according to claim 1, **characterized in that** the first clamping element is disposed on the rod (8).

5. The tripod according to claim 1, **characterized in that** the second clamping element is disposed at the end of the third segment (7) facing the tripod top (3).

6. The tripod according to claim 1, **characterized in that** the first clamping element and the second clamping element have an obliquely extending surface (28a, 28b; 29a, 29b) acted on by the first slide (13) and the second slide (14), respectively.

7. The tripod according to claim 6, **characterized in that** the first slide (13) is loaded toward the oblique surface (28a, 28b) of the first clamping element (13) with a first spring (31), and the second slide (14) toward the oblique surface (29a, 29b) of the second clamping element (13) with a second spring (32).

8. The tripod according to claim 7, **characterized in that** the first slide (13) and the second slide (14) each have a surface facing the tripod top (3), and the middle segment (6) and the third segment (7) each have an abutment surface (39, 40), the first spring (31) being loaded against the surface on the first slide (13), and the surface on the second slide (14) and/or the abutment surfaces (39, 40) of the middle segment (6) and the third segment (7) being formed as cam surfaces (37, 38) oblique to the longitudinal axis (27) of the tripod leg.

9. The tripod according to claim 1, **characterized in that** the first clamping element is loaded out of the engaged position by a first return spring (55), and the second clamping element out of the engaged position by a second return spring (56).

10. The tripod according to claim 1, **characterized in that** the clamping element and the second clamping element are formed as levers (18, 19; 20, 21).

11. The tripod according to claim 10, **characterized in that** the lever (18, 19) forming the first clamping element and acting on the inside of the first segment (5) is linked to the rod (8).

12. The tripod according to claim 11, **characterized in that** the lever (18, 19) forming the first clamping element is linked to the end of the rod (8) facing the tripod top (3).

13. The tripod according to claim 10, **characterized in that** the lever (20, 21) forming the second clamping element and acting on the inside of the middle segment (6) is linked to the third segment (3).

14. The tripod according to claim 1, **characterized in that** two first clamping elements formed as levers (18, 19) adapted to be spread apart and acting on the inside of the first segment (5), and/or two second clamping elements formed as levers (20, 21) adapted to be spread apart and acting on the inside of the middle segment (6) the middle segment (6) are provided.

15. The tripod according to claims 9 and 14, **characterized in that** the first return spring (55) connects the two levers (18, 19) acting on the inside of the first segment (5), and the second return spring (56) connects the two levers (20, 21) acting on the inside of the middle segment (6).

16. The tripod according to claim 1, **characterized in that** the first slide (13) and the second slide (14) are formed as sheaths displaceable on the rod (8).

17. The tripod according to any of the above claims, **characterized in that** the end of the middle segment (6) facing the tripod top (3) has a first end cap (33), and the end of the third segment (7) facing the tripod top (3) has a second end cap (24).

18. The tripod according to claims 8 and 17, **characterized in that** the abutment surface (39) of the middle segment (6) is provided in the first end cap (33), and the abutment surface (14) of the third segment (7) is provided in the second end cap (24).

19. The tripod according to claims 8 and 18, **characterized in that** the first spring (31) loading the first slide (13) is supported on the first end cap (33), and the second spring (32) loading the second slide (19) is supported on the second end cap (24).

## Revendications

1. Support (1) comportant une pièce supérieure de support (3), au moins une jambe de support (2) qui est constituée de trois segments télescopiques (5, 6, 7) pour le réglage de la longueur et un dispositif de fixation, conformé en dispositif de serrage, qui est destiné à fixer la longueur réglée de la jambe de support (2) et qui peut être actionné en tournant le segment médian (6) par rapport au premier segment (5) se trouvant du côté de la pièce supérieure de support (3), **caractérisé en ce que**
le troisième segment (7), du côté opposé à la pièce supérieure de support (3), est disposé sans pouvoir tourner par rapport au segment médian (6),
le dispositif de serrage comporte une barre (8) qui est guidée sans pouvoir tourner dans le premier segment (5), et par rapport à laquelle le segment médian et le troisième segment (6, 7) sont aptes à tourner,
une première coulisse (13), mobile axialement, est disposée sur la barre (8) à l'intérieur du premier segment (5) et amène au moins un premier élément de serrage en engagement avec le côté intérieur du premier segment (5) lorsque l'on tourne le segment médian (6) dans une direction par rapport à la barre (8) et hors engagement avec le côté intérieur du premier segment (5) lorsque l'on tourne le segment médian (6) dans la direction opposée par rapport à la barre (8), et
une deuxième coulisse (14), mobile axialement, est disposée sur la barre (8) à l'intérieur du segment médian (6) et amène au moins un deuxième élément de serrage en engagement avec le côté intérieur du segment médian (6) lorsque l'on tourne le troisième segment (7) dans une direction par rapport à la barre (8) et hors engagement avec le côté intérieur du segment médian (6) lorsque l'on tourne le troisième segment (7) dans la direction opposée par rapport à la barre (8).

2. Support selon la revendication 1, **caractérisé en ce qu'**une poignée tournante est montée sur le premier segment (5) de façon à pouvoir tourner et s'engage sans pouvoir tourner sur le segment médian (6).

3. Support selon la revendication 2, **caractérisé en ce que** la poignée tournante (46) est disposée à l'extrémité du premier segment (5) qui est opposée à la pièce supérieure de support (3).

4. Support selon la revendication 1, **caractérisé en ce que** le premier élément de serrage est disposé sur la barre (8).

5. Support selon la revendication 1, **caractérisé en ce que** le deuxième élément de serrage, est disposé à l'extrémité du troisième segment (16) qui est située du côté de la pièce supérieure de support (3).

6. Support selon la revendication 1, **caractérisé en ce que** le premier élément de serrage et le deuxième élément de serrage présente une surface oblique (28a, 28b ; 29a, 29b) sur laquelle s'engage la première coulisse (13) respectivement la deuxième coulisse (14).

7. Support selon la revendication 6, **caractérisé en ce que** la première coulisse (13) est contrainte sur la surface oblique (28a, 28b) du premier élément de serrage au moyen d'un premier ressort (31) et la deuxième coulisse (14) est contrainte sur la surface oblique (29a, 29b) du deuxième élément de serrage au moyen d'un deuxième ressort (30).

8. Support selon la revendication 7, **caractérisé en ce que** la première coulisse (13) et la deuxième coulisse (14) présentent chacune une surface située du côté de la pièce supérieure de support (3) et le segment médian (6) et le troisième segment (16) présentent chacun une surface de contre-appui (39, 40), le premier ressort (31) étant contraint vers la surface de la première coulisse (13) et la surface de la deuxième coulisse (14) et/ou la surface de contre-appui (39, 40) du segment médian (6) et du troisième et segment (7) étant conformées en surface de came (37, 38) oblique par rapport à l'axe longitudinal de la jambe de support (27).

9. Support selon la revendication 1, **caractérisé en ce que** le premier élément de serrage est contraint de s'écarter de la position d'engagement au moyen d'un premier ressort de rappel (55) et le deuxième élément de serrage est contraint de s'écarter de la position d'engagement au moyen d'un deuxième ressort de rappel (56).

10. Support selon la revendication 1, **caractérisé en ce que** le premier élément de serrage et le deuxième élément de serrage sont conformés en levier (18, 19 ; 20,21).

11. Support selon la revendication 10, **caractérisé en ce que** le levier (18, 19), dont est formé le premier élément de serrage et qui s'engage sur le côté intérieur du premier segment (5), est articulé sur la barre (8).

12. Support selon la revendication 11, **caractérisé en ce que** le levier (18, 19) dont est formé le premier élément de serrage, est articulé sur l'extrémité de la barre (8) qui est située du côté de la pièce supérieure de support (3).

13. Support selon la revendication 10, **caractérisé en ce que** le levier (20, 21), dont est formé le deuxième élément de serrage et qui s'engage sur le côté intérieur du segment médian (6), est articulé sur le troisième segment (3).

14. Support selon la revendication 1, **caractérisé en ce qu'**il est prévu deux premiers éléments de serrage qui sont conformés en leviers (18, 19) pouvant s'écarter l'un de l'autre et qui s'engagent sur le côté intérieur du premier segment (5) et/ou deux deuxièmes éléments de serrage qui sont conformés en leviers (20, 21) pouvant s'écarter l'un de l'autre et qui s'engagent sur le côté intérieur du segment médian (6).

15. Support selon la revendication 9 et 14, **caractérisé en ce que** le premier ressort de rappel (55) relie les deux leviers (18, 19) qui s'engagent sur le côté intérieur du premier segment (5) et le deuxième ressort de rappel (56) relie les deux leviers (20, 21) qui s'engagent sur le côté intérieur du segment médian (6).

16. Support selon la revendication 1, **caractérisé en ce que** la première coulisse (13) et la deuxième coulisse (14) sont conformées en manchon mobile sur la barre (8).

17. Support selon l'une des revendications précédentes, **caractérisé en ce que** l'extrémité du segment médian (6) qui est située du côté de la pièce supérieure de support (3) comporte un premier capuchon d'extrémité (33) et l'extrémité du troisième segment (7) située du côté de la pièce supérieure de support (3) comporte un deuxième capuchon d'extrémité (24).

18. Support selon les revendications 8 et 17, **caractérisé en ce que** la surface de contre-appui (39) du segment médian (6) est prévue dans le premier capuchon d'extrémité (33) et la surface de contre-appui (14) du troisième segment (7) est prévue dans le deuxième capuchon d'extrémité (24).

19. Support selon les revendications 8 et 18, **caractérisé en ce que** le premier ressort (31), qui contraint la première coulisse (13), s'appuie sur le premier capuchon d'extrémité (33) et le deuxième ressort (32), qui contraint la deuxième coulisse (19), s'appuie sur le deuxième capuchon d'extrémité (24).
